Europäisches Patentamt

European Patent Office

Office européen des brevets

(11) Publication number: 0 356 589
A1

## EUROPEAN PATENT APPLICATION

(21) Application number: 88308094.7

(22) Date of filing: 01.09.88

(51) Int. Cl.5: B60B 27/02 , B21K 1/40

(43) Date of publication of application:
07.03.90 Bulletin 90/10

(84) Designated Contracting States:
AT BE CH DE ES FR GB GR IT LI LU NL SE

(71) Applicant: Lai, Ta-chi
No. 373, Feng Chou Road Shen Kang Hsiang
Taichung Hsien(TW)

(72) Inventor: Lai, Ta-chi
No. 373, Feng Chou Road Shen Kang Hsiang
Taichung Hsien(TW)

(74) Representative: Cardwell, Stuart Martin et al
Roystons Tower Building Water Street
Liverpool, Merseyside L3 1BA(GB)

(54) Construction of bicycle hub.

(57) An improved construction of bicycle hub which avoids individual forming or welding of two formed pieces into one unit known heretofor, in which construction a spindle tube (1), tube connection (2), plate (3) and roller seal (4) are directly forged and extrusion formed as a one-piece construction in pecified molds.

FIG1

## Construction of Bicycle Hub.

The present invention relates to the construction of a bicycle hub.

A bicycle hub is composed of a spindle tube, tube connector, plate and roller seat. Conventional production of hubs is by means of individual forming or welding of two formed pieces into one unit, which would result in welding seams and welding spots, or even it is impossible to accurately locate the spindle line within the hub. Also, the hub's resistance to torsion is inadequate. Besides, failures in welding process may result in damaged parts and reduction of production efficiency.

As explained above, conventional bicycle hub production process and utilization efficiency could not meet economical requirements. In view of this, therefore, the inventor has developed this revolutionary invention after intensive and extensive research.

Accordingly the present invention provides a bicycle hub construction, featuring the monobloc forming process of the spindle, tube connector, plate and roller seat by means of direct smeltering and extrusion by specified molds and dies. Due to direct smeltering and extrusion forming process, the hub is free from any welding seams, welding spots, and can reduce production cost and increase the production efficiency, as well as to increase the accurate location of the spindle of hub and strengthen its resistance to torsion, resulting in upgraded precision and strength of said construction. Therefore, it is indeed quite practical for the production of high-class aluminium alloy bicycles.

The present invention will now be described further, by way of example only, with reference to the accompanying drawings, in which:-

Figure 1 shows section front and rear hubs according to the invention;

Figure 2 is an exploded respective view of a prior art hub construction; and

Figure 3 is another embodiment of the prior art hub construction.

The subject invention is made by smeltering and extrusion process with direct materials, so that its construction is one-layered, and that the spindle tube, tube connector, plate and the roller seat are monoblock formed. Due to the one-layered construction, the central axle can be more accurate, resulting in reduction of working processes and reduction of production cost, increase of production efficiency and enhancement of the precision and strength of said construction.

As we know, the bicycle has gradually changed its conventional role of transportation to sports purposes. In its development progress, bicycles have the inclusion of multi-step speed change and field bicycles have included fibreglass. carbon fibres, the properties of a hub, such as its capacity of load, resistance to impact and torsion, etc. have become more and more significant. As in conventional models, the hubs are positioned at the front and rear axles so that all impact or vibration is transmitted from the hub to bicycle frame. Also, the power of the wheels (chain and sprocket) is transmitted from the hub to the tyres. Therefore, the essential part of a bicycle ---Alternate Stress of torsion, and depressing, pulling and tangent forces --- is quite advanced and complicated, so, in addition to consideration of its force application, attention must be drawn to the accuracy of its central spindle line in order to extend its service life. As a matter of fact, to promote the bicycle sport and upgrade bicycle quality, improvement of the hub is necessary.

As in the construction of a conventional hub, there is no other exterior force on the spindle tube except torsion. Even, the torsion is quite limited in normal use. Due to most considerations and production requirements, most manufacturers prefer welding process for the tube connectors and the spindle tube.

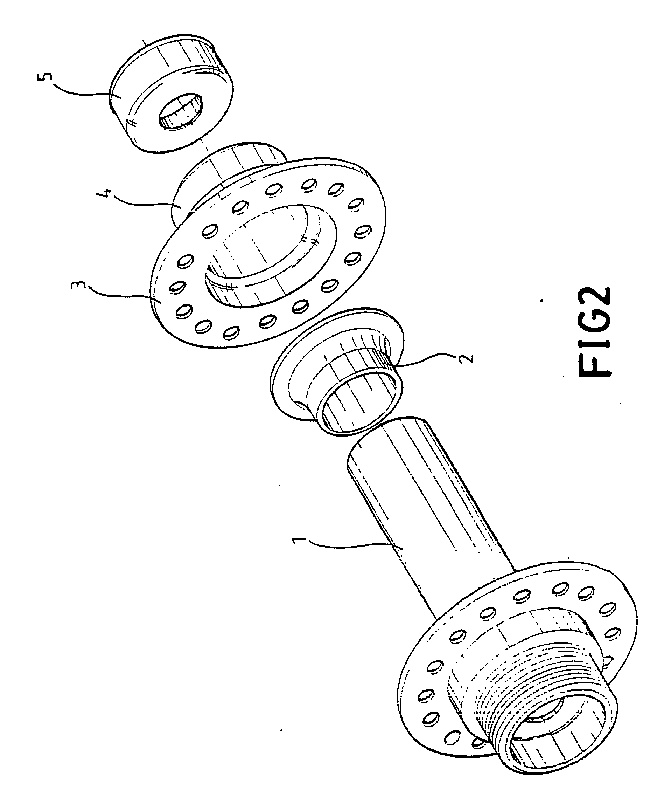

As shown in Figure 2, a conventional hub is composed of the spindle tube (1) which is welded onto the tube connector (2) and the plate (3) which is combined into one unit with the roller seat (4), while the roller channel (5) is depressed into the roller seat (4).

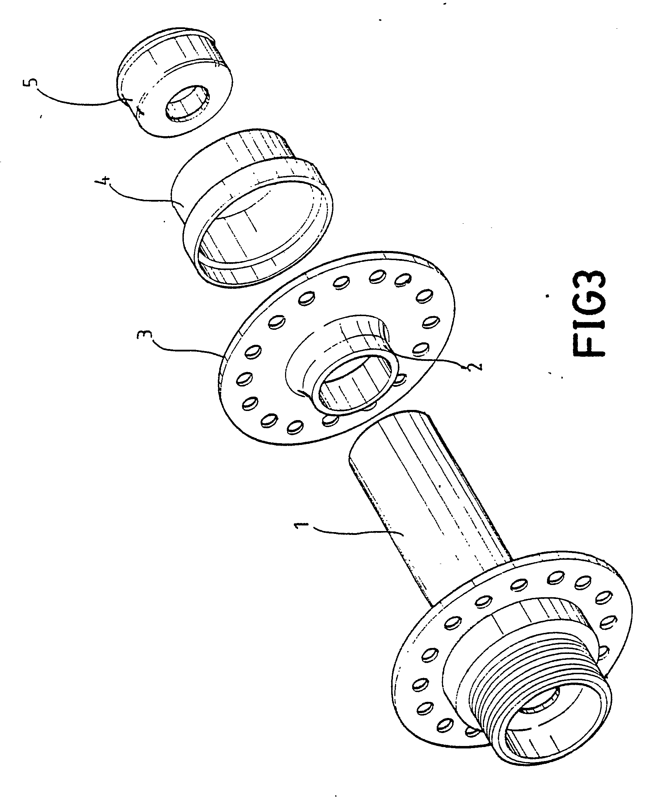

Another type illustrated in Figure 3 involves the structure that the spindle tube (1) is welded onto the tube connector (2), while the plate (3) onto the tube connector (2), and the roller seat (4) onto the plate (3), and the roller channel (3) depressed into the roller seat (4).

The above two conventional hub construction include the plate (3) as its main unit integrated with the tube connector (2) or the roller seat (4). Such construction would invariably result in seam joints or welding spots. That is, a bigger resistance to torsion is required at the welding joint to achieve the torsion transmission for the plate (3). Otherwise, the welding joint may be broken. Because, in the construction of said hub, the spindle line cannot be accurate during welding process so that it could not resist high tension and may crack, the inventor has designed, with a view to upgrade the hub precision and strength, a specified mold for direct smeltering or forgeing and extrusion forming process in order to assure the accuracy of the spindle line, and has provided a type of construction without seams to significantly reduce the weakness, so that the hub will have extended service life. As a matter of fact, it is the main purpose of the subject invention.

Another purpose of the subject invention is to provide a bicycle hub construction which will supply components during the forming process, without the need of welding, so as to reduce processing procedures and reduce production costs, and increase production efficiency and enhance the precision and strength of the construction.

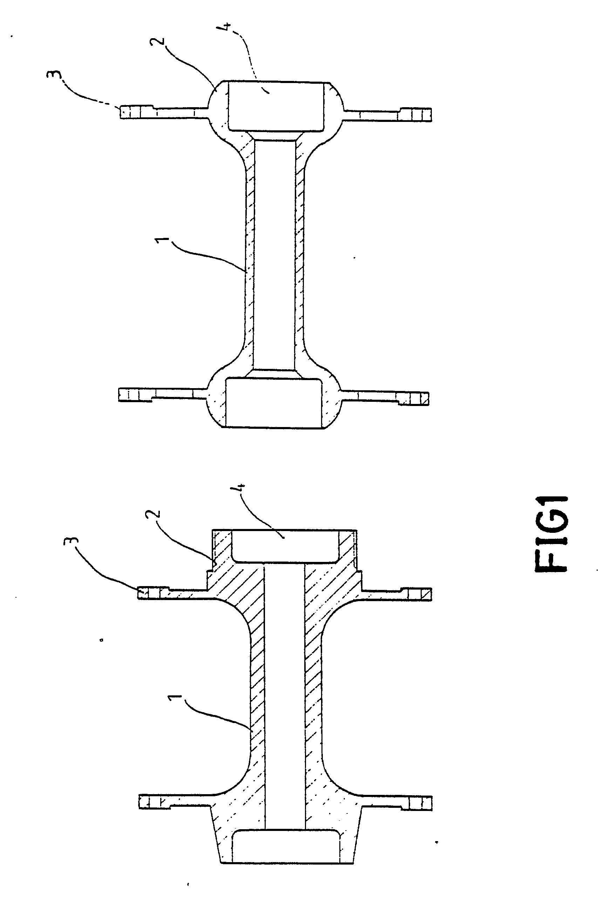

Referring to Figure 1 which shows in section a front and a rear hub. Because its exterior appearance is similar to conventional ones, but its construction is integrated, therefore only the sectional view is shown.

The spindle tube (1), the tube connector (2) and the plate (3) and the roller seat (4) can be directly forged or estrusion formed by specified mold into one-layered monobloc integration. That is, we can obtain a precise spindle line during the forming process.

As can be seen in the sectional view, the plate (3) and the tube connector (2) is one-layered integrated, (i.e. one piece) while the tube connector (2) can be designed with better reinforced edge during the forming process. Besides providing better resistance, it can reduce tangeant stress. Therefore, such seamless and non-welding-spot construction can avoid the defect of crackage during normal use.

Also can be seen in the sectional view, the spindle tube (1), the tube connector (2), the plate (3) and the roller seat (4) are one-layered and integrated in the forming process, no welding is required after it is formed, so as to avoid error or crackage during the welding process by conventional method, and to reduce the processing procedure, reduce production costs, enhance production efficiency and upgrade the precision and strength of said construction.

Therefore, the subject invention has no worry of rotation that cause crackage. It can simplify the processing procedure. Though employing conventional techniques, the construction of the subject invention is different from conventional ones. It can also enhance the product efficiency, upgrade its safety in use. All such advantages are sufficient to satisfy the requirements of unique creation and suitability to practibility for a patent.

process, the tube connector is provided with reinforced edges, so as to enhance the accuracy and resistance to torsion, so that a more accurate spindle line can be obtained and that the precision and strength of the construction can be enhanced.

## Claims

1. An improved construction of bicycle hub, in which the spindle tube, tube connector, plate and roller seat, are directly forged and extrusion formed into one-layer integration by specified molds.

2. An improved construction of bicycle hub as claimed in claim 1 in which during the forming

**FIG1**

EP 0 356 589 A1

FIG2

FIG3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 242 531 (SCHÜRHOFF) <br> * Page 3, line 13 - page 4, line 22; figure 4 * | 1 | B 60 B 27/02 <br> B 21 K 1/40 |
| Y | | 2 | |
| Y | GB-A- 716 100 (MOTOBECANE) <br> * Page 1, lines 32-43; figure 1 * <br> --- | 2 | |
| X | GB-A- 17 142 (DAWES)(A.D. 1909) <br> * Page 4, line 35 - page 5, line 7; figure 11 * | 1 | |
| A | | 2 | |
| A | DE-B-1 087 433 (GOTTSCHALK) <br> * Column 1, line 36 - column 2, line 26; figure 2 * | 1 | |

TECHNICAL FIELDS SEARCHED (Int. Cl.4)

B 60 B
B 21 K

The present search report has been drawn up for all claims

| Place of search | Date of completion of the search | Examiner |
|---|---|---|
| THE HAGUE | 26-04-1989 | AYITER I. |